# EUROPEAN PATENT APPLICATION

(11) **EP 4 845 194 A1**
(43) Date of publication of application: **25.11.2026**
(21) Application number: 24917635.5
(22) Date of filing: 15.01.2024
(51) Int. Cl.: H04W 12/37

(54) **POLICY CONTROL METHOD, DEVICE, AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Gunzelmann, Rainer
(86) International application number: PCT/CN2024/072406
(87) International publication number: WO 2025/152007

(57) **Abstract**

The present disclosure relates to a policy control method, a device, and a storage medium. The method comprises: acquiring a user plane (UP) security policy; and performing security protection on first UP data on the basis of the UP security policy, the first UP data being UP data locally transmitted by a terminal device by means of an access network device. In this way, the access network device can perform security protection on the locally transmitted UP data on the basis of the acquired UP security policy.

## Description

### TECHNICAL FIELD

The disclosure relates to the field of communication technology, and in particular to a policy control method, a device, and a storage medium.

### BACKGROUND

Non-terrestrial Networks (NTN) communication systems provide a seamless coverage for user equipment (UE) by deploying the functions of an access network device or a part of functions of the access network device on a non-terrestrial device such as satellites. UE-satellite-UE communication is a communication between UEs within the coverage area of one or more serving satellites via the access network device on the satellites, and user plane (UP) data is locally transmitted on a next generation NodeB (gNB) on the satellites.

### SUMMARY

Embodiments of the disclosure provide a policy control method, a device, and a storage medium.

According to a first aspect of the embodiments of the disclosure, a policy control method is provided. The method is performed by an access network device, including:
obtaining a user plane (UP) security policy; and
performing security protection for first UP data based on the UP security policy, in which the first UP data is UP data locally transmitted by a terminal via the access network device.

According to a second aspect of the embodiments of the disclosure, a policy control method is provided. The method is performed by a unified data management (UDM), including:
sending a UP security policy via an AMF to an access network device during a registration procedure of a terminal, in which the UP security policy is used by the access network device to perform security protection for first UP data, and the first UP data is UP data locally transmitted by the terminal via the access network device.

According to a third aspect of the embodiments of the disclosure, a policy control method is provided. The method is performed by a policy control function (PCF), including:
sending a UP security policy via an AMF to an access network device during a service authorization and information provisioning procedure of a terminal, in which the UP security policy is used by the access network device to perform security protection for first UP data, and the first UP data is UP data locally transmitted by the terminal via the access network device.

According to a fourth aspect of the embodiments of the disclosure, an access network device is provided. The access network device includes:
a transceiver module, configured to obtain a user plane (UP) security policy; and
a processing module, configured to perform security protection for first UP data based on the UP security policy, in which the first UP data is UP data locally transmitted by a terminal via the access network device.

According to a fifth aspect of the embodiments of the disclosure, a UDM is provided. The UDM includes:
a transceiver module, configured to send a UP security policy via an AMF to an access network device during a registration procedure of a terminal, in which the UP security policy is used by the access network device to perform security protection for first UP data, and the first UP data is UP data locally transmitted by the terminal via the access network device.

According to a sixth aspect of the embodiments of the disclosure, a PCF is provided. The PCF includes:
a transceiver module, configured to send a UP security policy via an AMF to an access network device during a service authorization and information provisioning procedure of a terminal, in which the UP security policy is used by the access network device to perform security protection for first UP data, and the first UP data is UP data locally transmitted by the terminal via the access network device.

According to a seventh aspect of the embodiments of the disclosure, a communication device is provided. The communication device includes: one or more processors, in which the communication device is configured to perform optional implementations in any one of the first, second, or third aspect.

According to an eighth aspect of embodiments of the disclosure, a communication system is provided. The communication system includes an access network device, a UDM, and a PCF. The access network device is configured to perform the method according to optional implementations in the first aspect. The UDM is configured to perform the method according to optional implementations in the second aspect. The PCF is configured to perform the method according to optional implementations in the third aspect.

According to a ninth aspect of embodiments of the disclosure, a storage medium is provided. The storage medium stores instructions, in which the instructions, when executed on a communication device, cause the communication device to perform the method according to optional implementations in any one of the first, second or third aspect, for example.

The technical solution in the embodiments of the disclosure may include the following beneficial effects: by obtaining the UP security policy, and performing security protection for first UP data based on the UP security policy, in which the first UP data is UP data locally transmitted by a terminal via the access network device, the access network device may performing security protection for the locally transmitted UP data based on the obtained UP security policy.

It should be understood that the above general description and the following detailed description are exemplary and explanatory only, and are not intended to limit the disclosure.

### BRIEF DESCRIPTION OF THE DRAWINGS

To more clearly illustrate the technical solutions in the embodiments of the disclosure, the accompanying drawings required for the description of the embodiments are introduced below. The following drawings are only some embodiments of the disclosure and do not impose specific limitations on the protection scope of the disclosure.
FIG. 1A is a schematic diagram illustrating an architecture of a communication system according to an embodiment of the present disclosure.
FIG. 1B is a schematic diagram illustrating an architecture of a communication system according to an embodiment of the present disclosure.
FIG. 1C is a schematic diagram illustrating a UE-satellite-UE communication scenario according to an embodiment of the present disclosure.
FIG. 2A is an interaction diagram illustrating a policy control method according to an embodiment of the disclosure.
FIG. 2B is an interaction diagram illustrating a policy control method according to an embodiment of the disclosure.
FIG. 3A is a flowchart illustrating a policy control method according to an embodiment of the disclosure.
FIG. 3B is a flowchart illustrating a policy control method according to an embodiment of the disclosure.
FIG. 3C is a flowchart illustrating a policy control method according to an embodiment of the disclosure.
FIG. 3D is a flowchart illustrating a policy control method according to an embodiment of the disclosure.
FIG. 3E is a flowchart illustrating a policy control method according to an embodiment of the disclosure.
FIG. 3F is a flowchart illustrating a policy control method according to an embodiment of the disclosure.
FIG. 4A is a flowchart illustrating a policy control method according to an embodiment of the disclosure.
FIG. 4B is a flowchart illustrating a policy control method according to an embodiment of the disclosure.
FIG. 5 is a flowchart illustrating a policy control method according to an embodiment of the disclosure.
FIG. 6A is an interaction diagram illustrating a policy control method according to an embodiment of the disclosure.
FIG. 6B is an interaction diagram illustrating a policy control method according to an embodiment of the disclosure.
FIG. 7A is a block diagram illustrating an access network device according to an embodiment of the disclosure.
FIG. 7B is a block diagram illustrating a UDM according to an embodiment of the disclosure.
FIG. 7C is a block diagram illustrating a PCF according to an embodiment of the disclosure.
FIG. 8A is a block diagram illustrating a communication device according to an embodiment of the disclosure.
FIG. 8B is a block diagram illustrating a chip according to an embodiment of the disclosure.

### DETAILED DESCRIPTION

The disclosure provides a policy control method, a device, and a storage medium.

According to a first aspect of the embodiments of the disclosure, a policy control method is provided. The method is performed by an access network device, including:
obtaining a user plane (UP) security policy; and
performing security protection for first UP data based on the UP security policy, in which the first UP data is UP data locally transmitted by a terminal via the access network device.

In the above embodiments, the access network device may perform security protection for the locally transmitted UP data based on the obtained UP security policy.

In combination with some embodiments of the first aspect, in some embodiments, the terminal includes a first terminal and/or a second terminal, and the UP security policy includes at least one of a first UP security policy or a second UP security policy, in which the first UP security policy is a UP security policy corresponding to the first terminal, and the second UP security policy is a UP security policy corresponding to the second terminal, and the first terminal and the second terminal perform UP data local transmission via the access network device.

In the above embodiments, different UP security policies may be used to protect UP data of different terminals, which improves the flexibility of security protection.

In combination with some embodiments of the first aspect, in some embodiments, obtaining the UP security policy includes at least one of:
receiving the first UP security policy sent by a first unified data management (UDM) via a first access and mobility management function (AMF), during a registration procedure of the first terminal; or
receiving the second UP security policy sent by a second UDM via a second AMF, during a registration procedure of the second terminal.

In the above embodiments, the access network device may obtain the first UP security policy corresponding to the first terminal from the first UDM and the second UP security policy corresponding to the second terminal from the second UDM, which enables security protection of the UP data between the first terminal and the access network device, and the UP data between the second terminal and the access network device.

In combination with some embodiments of the first aspect, in some embodiments, obtaining the UP security policy includes at least one of:
receiving the first UP security policy sent by a first policy control function (PCF) via a first AMF, during a service authorization and information provisioning procedure of the first terminal; or
receiving the second UP security policy sent by a second PCF via a second AMF, during a service authorization and information provisioning procedure of the second terminal.

In the above embodiments, the access network device may obtain the first UP security policy corresponding to the first terminal from the first PCF and the second UP security policy corresponding to the second terminal from the second PCF, which enables security protection of the UP data between the first terminal and the access network device, and the UP data between the second terminal and the access network device.

In combination with some embodiments of the first aspect, in some embodiments, the first UP data includes at least one of: second UP data or third UP data, in which the second UP data is UP data protected by the first UP security policy, and the third UP data is UP data protected by the second UP security policy.

In the above embodiments, different UP security policies may protect different UP data, thus improving the flexibility of security protection.

In combination with some embodiments of the first aspect, in some embodiments, performing the security protection for the first UP data based on the UP security policy includes:
receiving a first protocol data unit (PDU) session establishment request sent by the first terminal; and
activating security protection for the second UP data based on the first UP security policy.

In the above embodiments, after receiving the PDU session establishment request sent by the first terminal, the access network device may activate the security protection of the second UP data corresponding to the first terminal.

In combination with some embodiments of the first aspect, in some embodiments, performing the security protection for the first UP data based on the UP security policy includes:
receiving a second PDU session establishment request sent by the second terminal; and
activating security protection for the third UP data based on the second UP security policy.

In the above embodiments, after receiving the PDU session establishment request sent by the second terminal, the access network device may activate the security protection of the third UP data corresponding to the second terminal.

In combination with some embodiments of the first aspect, in some embodiments, the first UP security policy includes a third UP security policy, and the third UP security policy is configured to perform security protection for UP data locally transmitted by the access network device.

In combination with some embodiments of the first aspect, in some embodiments, obtaining the UP security policy includes:
obtaining first configuration information indicating the third UP security policy.

In the above embodiments, the access network device may obtain the third UP security policy via the first configuration information, which achieves the security protection for the locally transmitted UP data.

In combination with some embodiments of the first aspect, in some embodiments, performing the security protection for the first UP data based on the UP security policy includes:
activating the security protection for the first UP data corresponding to the third UP security policy based on the first configuration information.

In the above embodiments, the access network device may activate the security protection for the UP data based on the third UP security policy.

In combination with some embodiments of the first aspect, in some embodiments, the UP security policy indicates any one of:
activating the security protection for the first UP data;
not activating the security protection for the first UP data; or
first indication information indicating that the access network device determines whether to activate the security protection for the first UP data.

In the above embodiments, it may be determined whether to provide the security protection for the UP data based on the indication of the UP security policy.

In combination with some embodiments of the first aspect, in some embodiments, the security protection includes at least one of integrity protection or confidentiality protection.

In the above embodiments, the security protection may include at least one of the integrity protection or the confidentiality protection, which makes the security protection method more flexible.

According to a second aspect of the embodiments of the disclosure, a policy control method is provided. The method is performed by a UDM, including:
sending a UP security policy via an AMF to an access network device during a registration procedure of a terminal, in which the UP security policy is used by the access network device to perform security protection for first UP data, and the first UP data is UP data locally transmitted by the terminal via the access network device.

In combination with some embodiments of the second aspect, in some embodiments,
sending the UP security policy via the AMF to the access network device includes:
determining to send the UP security policy based on subscription information of the terminal; and
sending the UP security policy to the access network device via the AMF.

In the above embodiments, the UDM may determine whether to send the UP security policy to the access network device based on the subscription information of the terminal, so that the UP protection policy is sent only when the terminal needs the security protection, thus avoiding resource waste.

In combination with some embodiments of the second aspect, in some embodiments,
determining to send the UP security policy based on the subscription information of the terminal includes:
determining that the terminal is subscribed to UP data local transmission based on the subscription information of the terminal; and
determining to send the UP security policy.

In the above embodiments, when the UDM determines that the terminal has been subscribed to the UP data local transmission, the UDM sends the UP security policy to the access network device, thus avoiding the resource waste.

In combination with some embodiments of the second aspect, in some embodiments, the terminal device includes a first terminal and/or a second terminal, the UP security policy includes at least one of a first UP security policy or a second UP security policy, in which the first UP security policy is a UP security policy corresponding to the first terminal, and the second UP security policy is a UP security policy corresponding to the second terminal, and the first terminal and the second terminal perform UP data local transmission via the access network device.

In combination with some embodiments of the second aspect, in some embodiments, the UDM includes at least one of a first UDM or a second UDM, the first UDM is configured to send the first UP security policy to the access network device via a first AMF during a registration procedure of the first terminal, and the second UDM is configured to send the second UP security policy to the access network device via a second AMF during a registration procedure of the second terminal.

In combination with some embodiments of the second aspect, in some embodiments, the UP security policy indicates any one of:
activating the security protection for the first UP data;
not activating the security protection for the first UP data; or
first indication information indicating that the access network device determines whether to activate the security protection for the first UP data.

In combination with some embodiments of the second aspect, in some embodiments, the security protection includes at least one of integrity protection or confidentiality protection.

According to a third aspect of the embodiments of the disclosure, a policy control method is provided. The method is performed by a PCF, including:
sending a UP security policy via an AMF to an access network device during a service authorization and information provisioning procedure of a terminal, in which the UP security policy is used by the access network device to perform security protection for first UP data, and the first UP data is UP data locally transmitted by the terminal via the access network device.

In combination with some embodiments of the third aspect, in some embodiments, the terminal includes a first terminal and/or a second terminal, and the UP security policy includes at least one of a first UP security policy or a second UP security policy, in which the first UP security policy is a UP security policy corresponding to the first terminal, and the second UP security policy is a UP security policy corresponding to the second terminal, and the first terminal and the second terminal perform UP data local transmission via the access network device.

In combination with some embodiments of the third aspect, in some embodiments, the PCF includes at least one of a first PCF or a second PCF, the first PCF is configured to send the first UP security policy to the access network device via a first AMF during a service authorization and information provisioning procedure of the first terminal, and the second PCF is configured to send the second UP security policy to the access network device via a second AMF during a service authorization and information provisioning procedure of the second terminal.

In combination with some embodiments of the third aspect, in some embodiments, the method further includes:
determining the UP security policy corresponding to the terminal from a unified data repository (UDR).

In the above embodiments, the PCF may retrieve the UP security policy from the UDR, which improves the flexibility of obtaining the UP security policy.

In combination with some embodiments of the third aspect, in some embodiments, the UP security policy is used to indicate any one of:
activating the security protection for the first UP data;
not activating the security protection for the first UP data; or
first indication information indicating that the access network device determines whether to activate the security protection for the first UP data.

In combination with some embodiments of the third aspect, in some embodiments, the security protection includes at least one of integrity protection or confidentiality protection.

According to a fourth aspect of the embodiments of the disclosure, an access network device is provided, which may include at least one of a transceiver module or a processing module. The access network device may be used to perform optional implementations in the first aspect.

According to a fifth aspect of the embodiments of the disclosure, a UDM is provided, which may include at least one of a transceiver module or a processing module. The UDM may be used to perform optional implementations in the second aspect.

According to a sixth aspect of the embodiments of the disclosure, a PCF is provided, which may include at least one of a transceiver module or a processing module. The PCF may be used to perform optional implementations in the third aspect.

According to a seventh aspect of the embodiments of the disclosure, an access network device is provided, which may include one or more processors. The access network device may be used to perform optional implementations in the first aspect.

According to an eighth aspect of the embodiments of the disclosure, a UDM is provided, which may include one or more processors. The UDM may be used to perform optional implementations in the second aspect.

According to a ninth aspect of the embodiments of the disclosure, a PCF is provided, which may include one or more processors. The PCF may be used to perform optional implementations in the third aspect.

According to a tenth aspect of the embodiments of the disclosure, a communication device that may include one or more processors is provided. The communication device may be used to perform optional implementations in the first, second, or third aspect.

According to an eleventh aspect of embodiments of the disclosure, a communication system is provided, which may include an access network device, a UDM, and a PCF. The access network device is configured to perform the method according to optional implementations in the first aspect. The UDM is configured to perform the method according to optional implementations in the second aspect. The PCF is configured to perform the method according to optional implementations in the third aspect.

According to a twelfth aspect of embodiments of the disclosure, a storage medium is provided. The storage medium stores instructions, in which the instructions, when executed on a communication device, cause the communication device to perform the method according to optional implementations in any one of the first, second or third aspect, for example.

According to a thirteenth aspect of embodiments of the disclosure, a program product is provided. When the program product is executed by a communication device, the communication device is caused to perform the method according to optional implementations in any one of the first, second or third aspect, for example.

According to a fourteenth aspect of embodiments of the disclosure, a computer program is provided. When the computer program is running on a computer, the computer is caused to perform the method according to optional implementations in any one of the first, second or third aspect, for example.

According to a fifteenth aspect of embodiments of the disclosure, a chip or chip system including a processing circuit is provided, which is configured to perform the method according to optional implementations in any one of the first, second or third aspect, for example.

It may be understood that the aforementioned access network device, UDM, PCF, communication device, communication system, storage medium, program product, computer program, chip or chip system may all be used to execute the methods according to the embodiments of the disclosure. Therefore, for the beneficial effects it may achieve, reference may be made to the beneficial effects of the corresponding methods, which will not be repeated here.

The disclosure provides a policy control method, a device, and a storage medium. In some embodiments, the terms such as "policy control method", "method for information processing", and "communication method" may be used interchangeably; the terms such as "policy control apparatus", "information processing apparatus", "communication apparatus", and "communication device" may be used interchangeably; and the terms such as "policy control system", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, the embodiments may be arbitrarily combined, for example, some or all steps of different embodiments may be arbitrarily combined, and a certain embodiment may be arbitrarily combined with optional implementations of other embodiments.

In the embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" may mean two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only configured to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "configured to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus or the like may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", "subject" may be used interchangeably.

In some embodiments, the term such as "network" may be interpreted as an apparatus (e.g., an access network device, a core network device, etc.) included in the network.

In some embodiments, the term such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the access network device, the core network device, or the network device may be replaced with the terminal. For example, the embodiments of the disclosure may also be applied to the structure that communication between the access network device, the core network device, or the network device and the terminal is replaced with communication between terminals, e.g., device-to-device (D2D), vehicle-to-everything (V2X), etc. In this case, the may can also be configured to have all or part of the functions of the access network device. In addition, the terms such as "uplink" and "downlink" may be replaced with the terms corresponding to the communication between terminals (e.g., "sidelink"). For example, uplink channels and downlink channels may be replaced with side channels or direct channels, and uplink links and downlink links may be replaced with side links or direct links.

In some embodiments, the terminal may be replaced with the access network device, the core network device, or the network device. In this case, it can also be configured that the access network device, the core network device, or the network device has all or part of the functions of the terminal.

In some embodiments, the acquisition of data, information, etc. may comply with laws and regulations of the country to which the data is obtained.

In some embodiments, data, information, etc. may be obtained with consent from users.

Furthermore, each element, each row, or each column in the table of the disclosure may be implemented as an independent embodiment, and any combination of any element, any row, or any column may also be implemented as an independent embodiment.

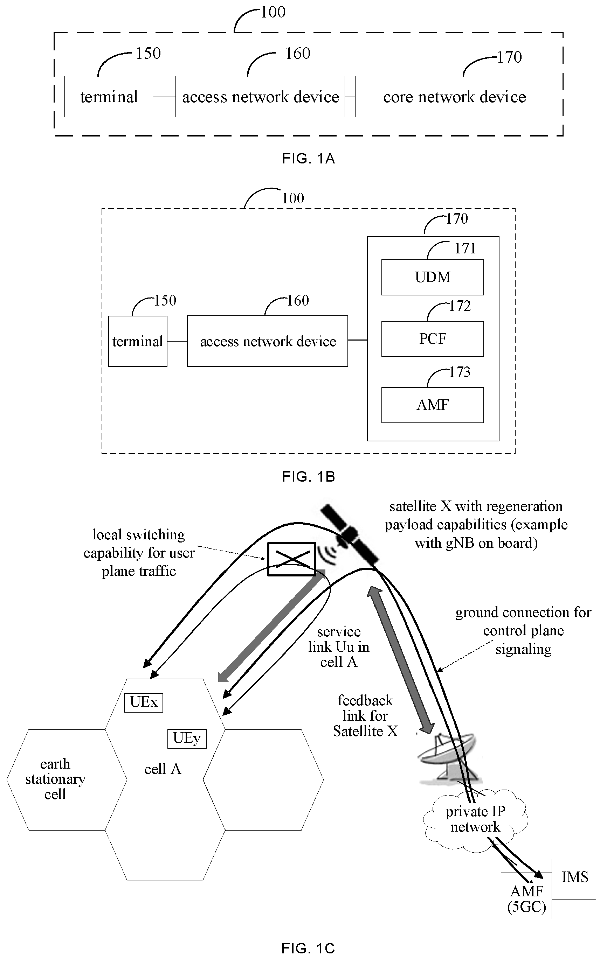

FIG. 1A is a schematic diagram illustrating an architecture of a communication system according to an embodiment of the disclosure. As shown in FIG. 1A, the communication system 100 may include a terminal (or a terminal device) 150, an access network device 160 and a core network device 170.

In some embodiments, the terminal 150 may for example include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device 160 may be a node or device that accesses a terminal to a wireless network. The access network device 160 may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solutions of the disclosure may be applied to an Open RAN architecture. In this case, the interfaces between or within the access network devices involved in the embodiments of the disclosure may be transformed into internal interfaces of the Open RAN. The processes and information interactions between these internal interfaces may be implemented in software or by programs.

In some embodiments, the access network device 160 may be composed of a central unit (CU) and a distributed unit (DU), in which the CU may also be called a control unit. A protocol layer of the access network device may be divided by adopting the CU-DU structure. Part of functions of the protocol layer are centrally controlled by the CU, and part of or all of remaining functions of the protocol layer are distributed in the DUs which are centrally controlled by the CU, but is not limited herein.

In some embodiments, the access network device 160 may be an access network device on a satellite in a Non-terrestrial Networks (NTN) communication system.

In some embodiments, the terminal 150 may include a first terminal and/or a second terminal, in which the first terminal and the second terminal perform communication via the access network device 160 on the satellite.

In some embodiments, the core network device 170 may be a single device, or may also be a plurality of devices or a group of devices. The core network may include, for example, at least one of evolved packet core (EPC), 5G core network (5GCN), or next generation core (NGC).

FIG. 1B is a schematic diagram illustrating an architecture of a communication system according to an embodiment of the present disclosure. As shown in FIG. 1B, the core network device 170 in the communication system 100 may include a plurality of functions, entities or network elements. For example, the core network device 170 may include at least one of a unified data management (UDM) 171, a policy control function (PCF) 172 or an access and mobility management function (AMF) 173. It should be noted that, for the specific functions, connection relationships and implementation methods of the above-mentioned AMF, PCF and UDM, reference may be made to relevant descriptions in the related art (such as 3GPP protocols), which will not be repeated here.

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure is also applicable to similar technical problems.

The following embodiments of the disclosure may be applied to the communication system 100 or part of the subjects shown in FIG. 1B, but are not limited herein. The subjects shown in FIG. 1B are examples, and the communication system may include all or part of the subjects in FIG. 1B, or may include other subjects than those shown in FIG. 1B. The number and the form of the subjects are arbitrary. Each of the subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, the present disclosure may be applied to UE-satellite-UE communication scenarios.

In some embodiments, UE-satellite-UE communication needs to be supported. UE-satellite-UE communication refers to the communication between UEs under the coverage of one or more serving satellites via the access network device on a satellite (local switching) without UP traffic going through the ground network.

FIG. 1C is a schematic diagram illustrating a UE-satellite-UE communication scenario according to an embodiment of the present disclosure. As shown in FIG. 1C, UEx and UEy communicate via a gNB on the satellite.

In some embodiments, security for UP traffic over a Uu interface is activated based on the security policy sent from the core network, which is set either by a UDM or a session management function (SMF) based on the specific service requested by the UE. The SMF determines at PDU session establishment the UP Security Enforcement information for the PDU session based on the following information:
(1) subscribed UP security policy which is part of service module (SM) subscription information received from UDM; or
(2) UP security policy locally configured per data network name (DNN), single network slice selection assistance information (S-NSSAI) in the SMF that is used when the UDM does not provide UP security policy information.

In some embodiments, the UP security policy indicates whether UP security protection shall be activated or not at Uu interface for that PDU session. It is used to activate UP confidentiality and/or UP integrity for the PDU session.

In some embodiments, as UE-satellite-UE communication switches the UP traffic at the gNB on the satellite locally, without letting it go through the ground network where the core network functions (e.g. SMF) reside, how the UP security policy should be provisioned to the gNB has become an urgent problem to be solved.

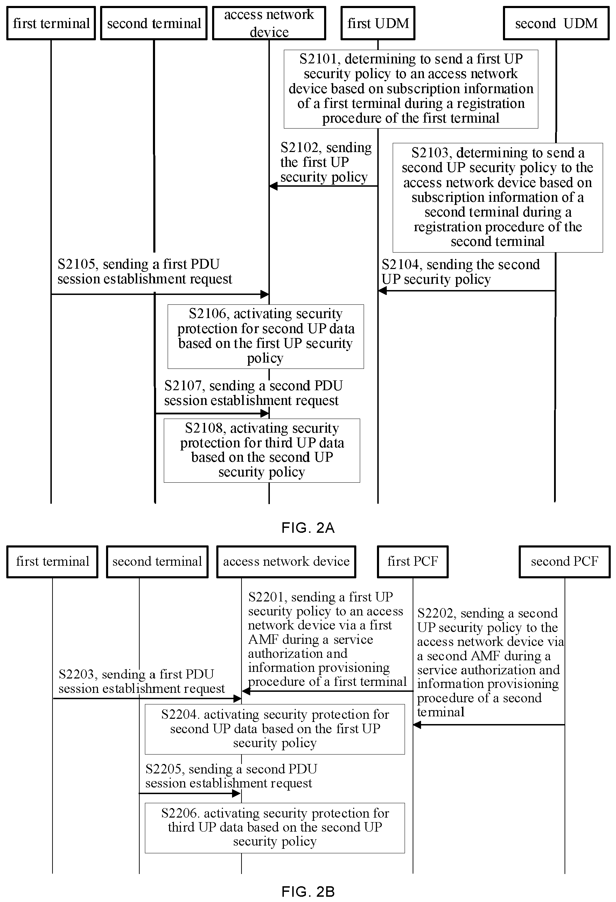

FIG. 2A is an interaction diagram illustrating a policy control method according to an embodiment of the disclosure. The method may be performed by the aforementioned communication system. As shown in FIG. 2A, the method may include the following steps S2101 to S2108.

At S2101, a first UDM determines to send a first UP security policy to an access network device based on subscription information of a first terminal during a registration procedure of the first terminal.

In some embodiments, the first terminal may be a terminal that communicates with a second terminal via a satellite.

In some embodiments, the first terminal may be a UE in the UE-satellite-UE communication scenario.

In some embodiments, the access network device may be an access network device on the satellite.

In some embodiments, the subscription information may indicate whether the first terminal has been subscribed to UP data local transmission.

In some embodiments, "UP data local transmission" may be understood as that "UP data is transmitted locally on the gNB on the satellite during the communication between the first terminal and the second terminal, without going through the ground network on the core network function side".

For example, the first terminal and the second terminal do not switch local UP data via the SMF.

In some embodiments, the first UP security policy may indicate any one of:
activating security protection for a second UP data;
not activating the security protection for the second UP data; or
first indication information indicating that the access network device determines whether to activate the security protection for the second UP data.

The second UP data may be the UP data between the first terminal and the access network device.

In an implementation, if the first UP security policy indicates the first indication information, the access network device may autonomously determine whether to activate the security protection for the second UP data.

In some embodiments, the first UDM may be any UDM in the core network, which is not limited in the embodiments of the disclosure.

In some embodiments, during the registration procedure of the first terminal towards the core network, the first UDM may obtain the subscription information of the first terminal and determine whether to send the first UP security policy based on the subscription information.

In some embodiments, it is determined based on the subscription information of the first terminal that, the first terminal has been subscribed to the UP data local transmission and it is determined to send the first UP security policy.

For example, if it is determined based on the subscription information of the first terminal that the first terminal has been subscribed to the UP data local transmission, then it is determined to send the first UP security policy to the access network device; if it is determined based on the subscription information of the first terminal that the first terminal has not been subscribed to the UP data local transmission, then it is determined not to send the first UP security policy to the access network device.

It should be noted that for the registration procedure for the first terminal, reference may be made to the provisions of the existing agreements, which will not be repeated here.

At S2102, the first UDM sends the first UP security policy to the access network device via a first AMF.

In some embodiments, if it is determined to send the first UP security policy to the access network device, the first UP security policy may be sent to the access network device via the first AMF.

In some embodiments, the first AMF may be any AMF in the core network, which is not limited in the embodiments of the disclosure.

At S2103, a second UDM determines to send a second UP security policy to the access network device based on subscription information of a second terminal during a registration procedure of the second terminal.

In some embodiments, the subscription information of the second terminal may be the same as that of the first terminal, or the subscription information of the second terminal may be different from that of the first terminal, which is not limited in the embodiments of the disclosure.

In some embodiments, the second UP security policy may indicate any one of:
activating security protection for third UP data;
not activating the security protection for the third UP data; or
first indication information indicating that the access network device determines whether to activate the security protection for the third UP data.

The third UP data may be the UP data between the second terminal and the access network device.

In an implementation, if the second UP security policy indicates the first indication information, the access network device may autonomously determine whether to activate the security protection for the third UP data.

In some embodiments, the second UDM may be any UDM in the core network, which is not limited in the embodiments of the disclosure.

In some embodiments, the second UDM may be different from the first UDM.

In some embodiments, during the registration procedure of the second terminal towards the core network, the second UDM may obtain the subscription information of the second terminal and determine whether to send the second UP security policy based on the subscription information.

In some embodiments, the second UDM determines that the second terminal has been subscribed to the UP data local transmission based on the subscription information of the second terminal, and determines to send the second UP security policy.

For example, if it is determined based on the subscription information of the second terminal that the second terminal has been subscribed to UP data local transmission, then it is determined to send the second UP security policy to the access network device; if it is determined based on the subscription information of the second terminal that the second terminal has not been subscribed to UP data local transmission, then it is determined not to send the second UP security policy to the access network device.

It should be noted that for the registration procedure for the second terminal, reference may be made to the provisions of the existing agreements, which will not be repeated here.

At S2104, the second UDM sends the second UP security policy to the access network device via a second AMF.

In some embodiments, if it is determined to send the second UP security policy to the access network device, the second UP security policy may be sent to the access network device via the second AMF.

In some embodiments, the second AMF may be any AMF in the core network, which is not limited in the embodiments of the disclosure.

In some embodiments, the second AMF may be different from the first AMF.

At S2105, the first terminal sends a first PDU session establishment request to the access network device.

In some embodiments, after registration is completed, the first terminal may send a first PDU session establishment request to the access network device.

It should be noted that for the content of the first PDU session establishment request and the method for sending the first PDU session establishment request, reference may be made to the existing protocols, which will not be repeated here.

At S2106, the access network device activates security protection for second UP data based on the first UP security policy.

In some embodiments, the security protection may include at least one of integrity protection or confidentiality protection.

In an implementation, if the first UP security policy indicates "activating the security protection for the second UP data", and the security protection includes the integrity protection, then the access network device may activate the integrity protection for the second UP data; if the first UP security policy indicates "activating the security protection for the second UP data", and the security protection includes the confidentiality protection, then the access network device may activate the confidentiality protection for the second UP data; if the first UP security policy indicates "activating security protection for the second UP data", and the security protection includes both the integrity protection and the confidentiality protection, then the access network device may activate both the integrity protection and the confidentiality protection for the second UP data.

In another implementation, if the first UP security policy indicates "not activating the security protection for the second UP data", then the access network device may not activate the security protection for the second UP data.

In another implementation, if the first UP security policy indicates the first indication information, the access network device may activate the security protection for the second UP data, or may not activate the security protection for the second UP data.

It should be noted that when the first UP security policy indicates the first indication information, the access network device may determine whether to activate the security protection for the second UP data based on the protocol agreements, which is not limited in the embodiments of the present disclosure.

At S2107, the second terminal sends a second PDU session establishment request to the access network device.

In some embodiments, after registration is completed, the second terminal may send the second PDU session establishment request to the access network device.

It should be noted that for the content of the second PDU session establishment request and the method for sending the second PDU session establishment request, reference may be made to the existing protocols, which will not be repeated here.

At S2108, the access network device activates security protection for third UP data based on the second UP security policy.

In an implementation, if the second UP security policy indicates "activating the security protection for the third UP data", and the security protection includes the integrity protection, then the access network device may activate the integrity protection for the third UP data; if the second UP security policy indicates "activating the security protection for the third UP data", and the security protection includes the confidentiality protection, then the access network device may activate the confidentiality protection for the third UP data; if the second UP security policy indicates "activating the security protection for the third UP data", and the security protection includes both the integrity protection and the confidentiality protection, then the access network device may activate both the integrity protection and the confidentiality protection for the third UP data.

In another implementation, if the second UP security policy indicates "not activating the security protection for the third UP data", then the access network device may not activate the security protection for the third UP data.

In another implementation, if the second UP security policy indicates the first indication information, the access network device may activate the security protection for the third UP data or may not activate the security protection for the third UP data.

It should be noted that when the second UP security policy indicates the first indication information, the access network device may determine whether to activate the security protection for the third UP data based on the protocol agreements, which is not limited in the embodiments of the present disclosure.

The methods involved in the embodiments of the disclosure may include at least one of the steps S2101 to S2108 as described above. For example, the steps S2101 and S2102 may be implemented as an independent embodiment, the steps S2103 and S2104 may be implemented as an independent embodiment, the steps S2105 and S2106 may be implemented as an independent embodiment, the steps S2107 and S2108 may be implemented as an independent embodiment, the steps S2101, S2102, S2105, and S2106 may be implemented as an independent embodiment, and the steps S2103, S2104, S2107, and S2108 may be implemented as an independent embodiment.

In some embodiments, the steps S2101 to S2108 may be performed in any order or simultaneously. For example, the steps S2101 and S2103 may be performed in any order or simultaneously. The steps S2102 and S2104 may be performed in any order or simultaneously. The steps S2105 and S2107 may be performed in any order or simultaneously. The steps S2106 and S2108 may be performed in any order or simultaneously.

In some embodiments, the steps S2101 to S2108 are all optional steps.

In some embodiments, other optional implementations may be described before or after the specification corresponding to FIG. 2A.

Using the above method, the access network device may receive the first UP security policy sent by the first UDM during the registration procedure of the first terminal, and activate the security protection for the second UP data based on the first UP security policy after receiving the first PDU session establishment request sent by the first terminal. During the registration procedure of the second terminal, the access network device may receive the second UP security policy sent by the second UDM, and activate the security protection for the third UP data based on the second UP security policy after receiving the second PDU session request sent by the second terminal. In this way, access network devices may achieve secure protection for the locally transmitted UP data via the UDM.

In some embodiments, the names of information, etc., are not limited to the names described in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", and "chip" may be used interchangeably.

In some embodiments, the terms such as "acquiring", "obtaining", "getting", "receiving", "transmitting", "bidirectional transmission", "sending and/or receiving" may be used interchangeably, which may be interpreted as receiving from another entity, obtaining from a protocol, obtaining from a high layer, obtaining via processing by itself, autonomously implementing, and other meanings.

In some embodiments, the terms such as "sending", "emitting", "reporting", "issuing", "transmitting", "bidirectional transmission", "sending and/or receiving" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

FIG. 2B is an interaction diagram illustrating a policy control method according to an embodiment of the disclosure. The method may be performed by the aforementioned communication system. As shown in FIG. 2B, the method may include the following steps S2201 to S2206.

At S2201, a first PCF sends a first UP security policy to an access network device via a first AMF during a service authorization and information provisioning procedure of a first terminal.

It should be noted that for the explanations of the first terminal, access network device, first UP security policy, and second UP data in the step S2201, reference may be made to the above step S2101, which will not be repeated here.

In some embodiments, the first PCF may be any PCF in the core network, which is not limited in the embodiments of the disclosure.

In some embodiments, during the service authorization and information provisioning procedure of the first terminal, the first PCF may send the first UP security policy to the access network device via the first AMF.

In some embodiments, the PCF may determine the UP security policy corresponding to the terminal from a Unified Data Repository (UDR).

For example, PCF may retrieve the first UP security policy corresponding to the first terminal from the UDR.

In some embodiments, the first AMF may be any AMF in the core network, which is not limited in the embodiments of the disclosure.

It should be noted that for the service authorization and information provisioning procedure of the first terminal, reference may be made to the provisions of the existing agreements, which will not be elaborated here.

At S2202, a second PCF sends a second UP security policy to the access network device via a second AMF during the service authorization and information provisioning procedure of a second terminal.

In some embodiments, the second PCF may be any PCF in the core network, which is not limited in the embodiments of the disclosure.

In some embodiments, the second PCF may be different from the first PCF.

In some embodiments, the subscription information of the second terminal may be the same as that of the first terminal, or the subscription information of the second terminal may be different from that of the first terminal, which is not limited in the embodiments of the disclosure.

In some embodiments, during the service authorization and information provisioning procedure of the second terminal, the second PCF may send the second UP security policy to the access network device via the second AMF.

In some embodiments, the PCF may retrieve the second UP security policy corresponding to the second terminal from the UDR.

In some embodiments, the second AMF can be any AMF in the core network, which is not limited in the embodiments of the disclosure.

In some embodiments, the second AMF may be different from the first AMF.

It should be noted that for the service authorization and information provisioning procedure for the second terminal, reference may be made to the provisions of the existing agreements, which will not be repeated here.

At S2203, the first terminal sends a first PDU session establishment request to the access network device.

For the optional implementation of the step S2203, reference may be made to optional implementations of the step S2105 in FIG. 2A, and other related parts in the embodiments involved in FIG. 2A, which will not be repeated here.

At S2204, the access network device activates security protection for second UP data based on the first UP security policy.

For the optional implementation of the step S2204, reference may be made to optional implementations of the step S2106 in FIG. 2A, and other related parts in the embodiments involved in FIG. 2A, which will not be repeated here.

At S2205, the second terminal sends a second PDU session establishment request to the access network device.

For the optional implementation of the step S2205, reference may be made to optional implementations of the step S2107 in FIG. 2A, and other related parts in the embodiments involved in FIG. 2A, which will not be repeated here.

At S2206, the access network device activates security protection for third UP data based on the second UP security policy.

For the optional implementation of the step S2206, reference may be made to optional implementations of the step S2108 in FIG. 2A, and other related parts in the embodiments involved in FIG. 2A, which will not be repeated here.

The methods involved in the embodiments of the disclosure may include at least one of the steps S2201 to S2206 as described above. For example, the step S2201 may be implemented as an independent embodiment, the step S2202 may be implemented as an independent embodiment, the steps S2203 and S2204 may be implemented as an independent embodiment, the steps S2205 and S2206 may be implemented as an independent embodiment, the steps S2201, S2203, and S2204 may be implemented as an independent embodiment, and the steps S2202, S2205, and S2206 may be implemented as an independent embodiment.

In some embodiments, the steps S2201 to S2206 may be performed in any order or simultaneously. For example, the steps S2201 and S2202 may be performed in any order or simultaneously. The steps S2203 and S2205 may be performed in any order or simultaneously. The steps S2204 and S2206 may be performed in any order or simultaneously.

In some embodiments, the steps S2201 to S2206 are all optional steps.

Using the above method, the access network device may receive the first UP security policy sent by the first PCF during the service authorization and information provisioning procedure of the first terminal, and activate the security protection for the second UP data based on the first UP security policy after receiving the first PDU session request sent by the first terminal. During the service authorization and information provisioning procedure of the second terminal, the access network device may receive the second UP security policy sent by the second PCF, and activate the security protection for the third UP data based on the second UP security policy after receiving the second PDU session request sent by the second terminal. In this way, the access network devices may achieve secure protection for the locally transmitted UP data via the PCF.

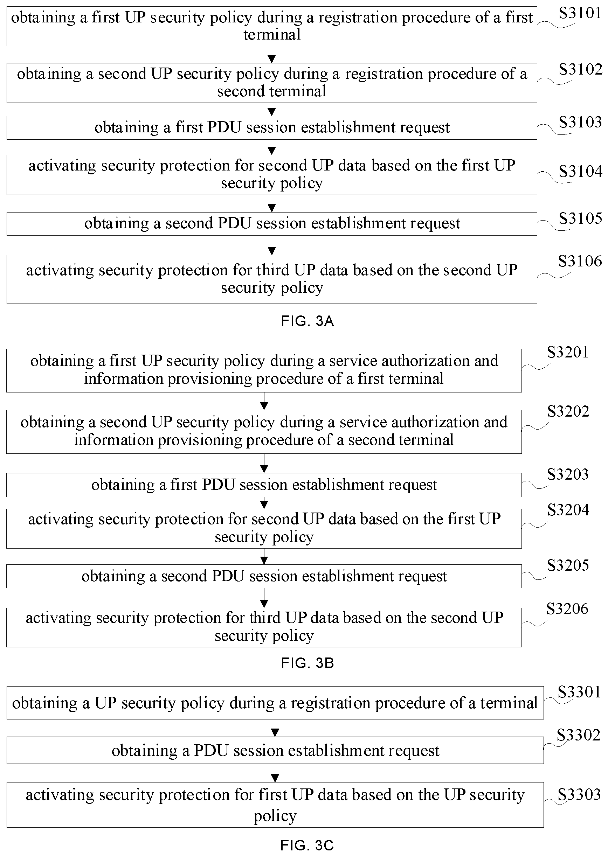

FIG. 3A is a flowchart illustrating a policy control method according to an embodiment of the disclosure. As shown in FIG. 3A, the embodiments of the disclosure relate to a policy control method, which may be performed by an access network device. The method may include the following steps S3101 to S3106.

At S3101, a first UP security policy is obtained during a registration procedure of a first terminal.

For the optional implementations of the step S3101, reference may be made to the optional implementations of the steps S2101 and S2102 in FIG. 2A, as well as other related parts in the embodiments involved in FIG. 2A, which will not be repeated here.

At S3102, a second UP security policy is obtained during a registration procedure of a second terminal.

For the optional implementations of the step S3102, reference may be made to the optional implementations of the steps S2103 and S2104 in FIG. 2A, as well as other related parts in the embodiments involved in FIG. 2A, which will not be repeated here.

At S3103, a first PDU session establishment request is obtained.

For the optional implementations of the step S3103, reference may be made to the optional implementations of the step S2105 in FIG. 2A, as well as other related parts in the embodiments involved in FIG. 2A, which will not be repeated here.

At S3104, security protection for second UP data is activated based on the first UP security policy.

For the optional implementations of the step S3104, reference may be made to the optional implementations of the step S2106 in FIG. 2A, as well as other related parts in the embodiments involved in FIG. 2A, which will not be repeated here.

At S3105, a second PDU session establishment request is obtained.

For the optional implementations of the step S3105, reference may be made to the optional implementations of the step S2107 in FIG. 2A, as well as other related parts in the embodiments involved in FIG. 2A, which will not be repeated here.

At S3106, security protection for third UP data is activated based on the second UP security policy.

For the optional implementations of the step S3106, reference may be made to the optional implementations of the step S2108 in FIG. 2A, as well as other related parts in the embodiments involved in FIG. 2A, which will not be repeated here.

The methods involved in the embodiments of the disclosure may include at least one of the steps S3101 to S3106 as described above. For example, the step S3101 may be implemented as an independent embodiment, the step S3102 may be implemented as an independent embodiment, the steps S3103 and S3104 may be implemented as an independent embodiment, the steps S3105 and S3106 may be implemented as an independent embodiment, the steps S3101, S3103 and step S3104 may be implemented as an independent embodiment, and the steps S3102, step S3105 and S3106 may be implemented as an independent embodiment.

In some embodiments, the steps S3101 to S3106 may be performed in any order or simultaneously. For example, the steps S3101 and S3102 may be performed in any order or simultaneously. The steps S3103 and S3105 may be performed in any order or simultaneously. The steps S3104 and S3106 may be performed in any order or simultaneously.

In some embodiments, the steps S3101 to S3106 are all optional steps.

FIG. 3B is a flowchart illustrating a policy control method according to an embodiment of the disclosure. As shown in FIG. 3B, the embodiments of the disclosure relate to a policy control method, which may be performed by an access network device. The method may include the following steps S3201 to S3206.

At S3201, a first UP security policy is obtained during a service authorization and information provisioning procedure of a first terminal.

For the optional implementations of the step S3201, reference may be made to the optional implementations of the step S220 in FIG. 2B, as well as other related parts in the embodiments involved in FIG. 2B, which will not be repeated here.

At S3202, a second UP security policy is obtained during a service authorization and information provisioning procedure of a second terminal.

For the optional implementations of the step S3202, reference may be made to the optional implementations of the step S2202 in FIG. 2B, as well as other related parts in the embodiments involved in FIG. 2B, which will not be repeated here.

At S3203, a first PDU session establishment request is obtained.

For the optional implementations of the step S3203, reference may be made to the optional implementations of the step S2203 in FIG. 2B, as well as other related parts in the embodiments involved in FIG. 2B, which will not be repeated here.

At S3204, security protection for second UP data is activated based on the first UP security policy.

For the optional implementations of the step S3204, reference may be made to the optional implementations of the step S2204 in FIG. 2B, as well as other related parts in the embodiments involved in FIG. 2B, which will not be repeated here.

At S3205, a second PDU session establishment request is obtained.

For the optional implementations of the step S3205, reference may be made to the optional implementations of the step S2205 in FIG. 2B, as well as other related parts in the embodiments involved in FIG. 2B, which will not be repeated here.

At S3206, security protection for third UP data is activated based on the second UP security policy.

For the optional implementations of the step S3206, reference may be made to the optional implementations of the step S2206 in FIG. 2B, as well as other related parts in the embodiments involved in FIG. 2B, which will not be repeated here.

The methods involved in the embodiments of the disclosure may include at least one of the steps S3201 to S3206 as described above. For example, the step S3201 may be implemented as an independent embodiment, the step S3202 may be implemented as an independent embodiment, the steps S3203 and S3204 may be implemented as an independent embodiment, the steps S3205 and S3206 may be implemented as an independent embodiment, the steps S3201, S3203 and S3204 may be implemented as an independent embodiment, and the steps S3202, S3205 and step S3206 may be implemented as an independent embodiment.

In some embodiments, the steps S3201 to S3206 may be performed in any order or simultaneously. For example, the steps S3201 and S3202 may be performed in any order or simultaneously, the steps S3203 and S3205 may be performed in any order or simultaneously, and the steps S3204 and S3206 may be performed in any order or simultaneously.

In some embodiments, the steps S3201 to S3206 are all optional steps.

FIG. 3C is a flowchart illustrating a policy control method according to an embodiment of the disclosure. As shown in FIG. 3C, the embodiments of the disclosure relate to a policy control method, which may be performed by an access network device. The method may include the following steps S3301 to S3303.

At S3301, a UP security policy is obtained during a registration procedure of a terminal.

For the optional implementations of the step S3301, reference may be made to the optional implementations of the steps S2101 to S2104 in FIG. 2A, the steps S3101 and S3102 in FIG. 3A, as well as other related parts in the embodiments involved in FIG. 2A and FIG. 3A, which will not be repeated here.

In some embodiments, the UP security policy includes at least one of a first UP security policy or a second UP security policy. The first UP security policy is a UP security policy corresponding to the first terminal, and the second UP security policy is a UP security policy corresponding to the second terminal, and the first terminal and the second terminal perform UP data local transmission via the access network device.

In some embodiments, the UP security policy indicates any one of:
activating the security protection for the first UP data;
not activating the security protection for the first UP data; or
first indication information indicating that the access network device determines whether to activate the security protection for the first UP data.

At S3302, a PDU session establishment request is obtained.

For the optional implementations of the step S3302, reference may be made to the optional implementations of the step S2105 in FIG. 2A, the step S3103 in FIG. 3A, as well as other related parts in the embodiments involved in FIG. 2A and FIG. 3A, which will not be repeated here.

At S3303, security protection for first UP data is activated based on the UP security policy.

For the optional implementations of the step S3303, reference may be made to the optional implementations of the steps S2106 and S2108 in FIG. 2A, the steps S3104 and S3106 in FIG. 3A, as well as other related parts in the embodiments involved in FIG. 2A and FIG. 3A, which will not be repeated here.

In some embodiments, the first UP data includes at least one of: second UP data or third UP data, in which the second UP data is UP data protected by the first UP security policy, and the third UP data is UP data protected by the second UP security policy.

In some embodiments, the above steps are all optional.

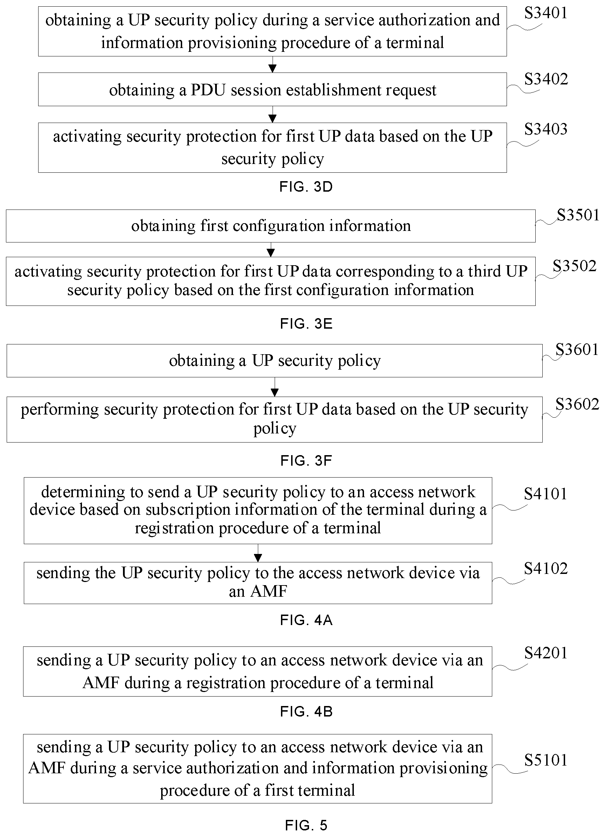

FIG. 3D is a flowchart illustrating a policy control method according to an embodiment of the disclosure. As shown in FIG. 3D, the embodiments of the disclosure relate to a policy control method, which may be performed by an access network device. The method may include the following steps S3401 to S3403.

At S3401, a UP security policy is obtained during a service authorization and information provisioning procedure of a terminal.

For the optional implementations of the step S3401, reference may be made to the optional implementations of the steps S2201 and S2202 in FIG. 2B, the steps S3201 and S3202 in FIG. 3B, as well as other related parts in the embodiments involved in FIG. 2B and FIG. 3B, which will not be repeated here.

At S3402, a PDU session establishment request is obtained.

For the optional implementations of the step S3402, reference may be made to the optional implementations of the steps S2203 and S2205 in FIG. 2B, the steps S3203 and S3205 in FIG. 3B, as well as other related parts in the embodiments involved in FIG. 2B and FIG. 3B, which will not be repeated here.

At S3403, security protection for first UP data is activated based on the UP security policy.

For the optional implementations of the step S3403, reference may be made to the optional implementations of the steps S2204 and S2206 in FIG. 2B, the steps S3204 and S3206 in FIG. 3B, as well as other related parts in the embodiments involved in FIG. 2B and FIG. 3B, which will not be repeated here.

In some embodiments, the above steps are all optional.

FIG. 3E is a flowchart illustrating a policy control method according to an embodiment of the disclosure. As shown in FIG. 3E, the embodiments of the disclosure relate to a policy control method, which may be performed by an access network device. The method may include the following steps S3501 to S3102.

At S3501, first configuration information is obtained.

In some embodiments, the UP security policy may include a third UP security policy, which is used to provide security protection for first UP data transmitted locally by the access network device.

In some embodiments, the third UP security policy may provide security protection for each first UP data transmitted locally via the access network device.

For example, when the first terminal and the second terminal communicate via the access network device, the third UP security policy may protect second UP data between the first terminal and the access network device, and may also protect third UP data between the second terminal and the access network device.

In some embodiments, the first configuration information may indicate the third UP security policy.

In some embodiments, the first configuration information may be specified by a protocol or predefined, which is not limited in the embodiments of the disclosure.

In some embodiments, the third UP security policy may include activating security protection for first UP data, or not activating the security protection for the first UP data.

The first UP data may include at least one of the second UP data or the third UP data.

At S3502, security protection for first UP data corresponding to a third UP security policy is activated based on the first configuration information.

In some embodiments, if the third UP security policy is activating the protection for the first UP data, the access network device may initiate the security protection for the first UP data.

In some embodiments, if the third UP security policy is not activating the protection for the first UP data, the access network device may not activate the security protection for the first UP data.

Using the above method, the third UP security policy may be pre-configured in the access network device, to achieve the security protection for the UP data transmitted locally by the access network device.

FIG. 3F is a flowchart illustrating a policy control method according to an embodiment of the disclosure. As shown in FIG. 3F, the embodiments of the disclosure relate to a policy control method, which may be performed by an access network device. The method may include the following steps S3601 to S3602.

At S3601, a UP security policy is obtained.

For the optional implementations of the step S3601, reference may be made to the optional implementations of the steps S2101 to S2104 in FIG. 2A, the steps S2201 to S2202 in FIG. 2B, the steps S3101 to S3102 in FIG. 3A, the steps S3201 to S3202 in FIG. 3B, and the step S3501 in FIG. 3E, as well as other related parts in the embodiments involved in FIG. 2A, FIG. 2B, FIG. 3A, FIG. 3B, and FIG. 3E, which will not be repeated here.

At S3602, security protection for first UP data is performed based on the UP security policy.

For the optional implementations of the step S3602, reference may be made to the optional implementations of the steps S2105 to S2108 in FIG. 2A, the steps S2203 to S2206 in FIG. 2B, the steps S3103 to S3106 in FIG. 3A, the steps S3203 to S3206 in FIG. 3B, and the step S3502 in FIG. 3E, as well as other related parts in the embodiments involved in FIG. 2A, FIG. 2B, FIG. 3A, FIG. 3B, and FIG. 3E, which will not be repeated here.

The first UP data is UP data locally transmitted by a terminal via the access network device.

In some embodiments, the terminal includes a first terminal and/or a second terminal, and the UP security policy may include at least one of a first UP security policy or a second UP security policy, in which the first UP security policy is a UP security policy corresponding to the first terminal, and the second UP security policy is a UP security policy corresponding to the second terminal, and the first terminal and the second terminal perform UP data local transmission via the access network device.

In some embodiments, obtaining the UP security policy includes at least one of:
receiving the first UP security policy sent by a first UDM via a first AMF, during a registration procedure of the first terminal; or
receiving the second UP security policy sent by a second UDM via a second AMF, during a registration procedure of the second terminal.

In some embodiments, obtaining the UP security policy includes at least one of:
receiving the first UP security policy sent by a first PCF via a first AMF, during a service authorization and information provisioning procedure of the first terminal; or
receiving the second UP security policy sent by a second PCF via a second AMF, during a service authorization and information provisioning procedure of the second terminal.

In some embodiments, the first UP data includes at least one of second UP data or third UP data, in which the second UP data is UP data protected by the first UP security policy, and the third UP data is UP data protected by the second UP security policy.

In some embodiments, performing the security protection for the first UP data based on the UP security policy includes:
receiving a first PDU session establishment request sent by the first terminal; and
activating security protection for the second UP data based on the first UP security policy.

In some embodiments, performing the security protection for the first UP data based on the UP security policy includes:
receiving a second PDU session establishment request sent by the second terminal; and
activating security protection for the third UP data based on the second UP security policy.

In some embodiments, the first UP security policy includes a third UP security policy, and the third UP security policy is configured to perform security protection for UP data locally transmitted by the access network device.

In some embodiments, obtaining the UP security policy includes:
obtaining first configuration information indicating the third UP security policy.

In some embodiments, performing the security protection for the first UP data based on the UP security policy includes:
activating the security protection for the first UP data corresponding to the third UP security policy based on the first configuration information.

In some embodiments, the UP security policy indicates any one of:
activating the security protection for the first UP data;
not activating the security protection for the first UP data; or
first indication information indicating that the access network device determines whether to activate the security protection for the first UP data.

In some embodiments, the security protection includes at least one of integrity protection or confidentiality protection.

FIG. 4A is a flowchart illustrating a policy control method according to an embodiment of the disclosure. As shown in FIG. 4A, the embodiments of the disclosure relate to a policy control method, which may be performed by a UDM. The method may include the following steps S4101 to S4102.

At S4101, during a registration procedure of a terminal, it is determined to send a UP security policy to an access network device based on subscription information of the terminal.

For the optional implementations of the step S4101, reference may be made to the optional implementations of the steps S2101 and S2103 in FIG. 2A, as well as other related parts in the embodiments involved in FIG. 2A, which will not be repeated here.

In some embodiments, the UDM includes at least one of a first UDM or a second UDM, the first UDM is configured to send the first UP security policy to the access network device via a first AMF during a registration procedure of the first terminal, and the second UDM is configured to send the second UP security policy to the access network device via a second AMF during a registration procedure of the second terminal.

At S4102, the UP security policy is sent to the access network device via an AMF.

For the optional implementations of the step S4102, reference may be made to the optional implementations of the steps S2102 and S2104 in FIG. 2A, as well as other related parts in the embodiments involved in FIG. 2A, which will not be repeated here.

In some embodiments, the AMF may include a first AMF and/or a second AMF.

For example, if the terminal includes the first terminal, the AMF may include the first AMF; if the terminal device includes the second terminal, the AMF may include the second AMF; and if the terminal device includes both the first and second terminals, the AMF may include both the first and second AMFs.

In some embodiments, the above steps are all optional.

FIG. 4B is a flowchart illustrating a policy control method according to an embodiment of the disclosure. As shown in FIG. 4A, the embodiments of the disclosure relate to a policy control method, which may be performed by a network device. The method may include the following step S4201.

At S4201, during a registration procedure of a terminal, a UP security policy is sent to an access network device via an AMF.

For the optional implementations of the step S4201, reference may be made to the optional implementations of the steps S2101 to S2104 in FIG. 2A, the step S4102 in FIG. 4A, and other related parts in the embodiments involved in FIG. 2A and FIG. 4A, which will not be repeated here.

In some embodiments, sending the UP security policy to the access network device via the AMF includes:
determining to send the UP security policy based on subscription information of the terminal; and
sending the UP security policy to the access network device via the AMF.

In some embodiments, determining to send the UP security policy based on the subscription information of the terminal includes:
determining that the terminal is subscribed to UP data local transmission based on the subscription information of the terminal; and
determining to send the UP security policy.

In some embodiments, the terminal device includes a first terminal and/or a second terminal, and the UP security policy includes at least one of a first UP security policy or a second UP security policy, in which the first UP security policy is a UP security policy corresponding to the first terminal, and the second UP security policy is a UP security policy corresponding to the second terminal, and the first terminal and the second terminal perform UP data local transmission via the access network device.

In some embodiments, the UDM includes at least one of a first UDM or a second UDM, the first UDM is configured to send the first UP security policy to the access network device via a first AMF during a registration procedure of the first terminal, and the second UDM is configured to send the second UP security policy to the access network device via a second AMF during a registration procedure of the second terminal.

In some embodiments, the UP security policy indicates any one of:
activating the security protection for the first UP data;
not activating the security protection for the first UP data; or
first indication information indicating that the access network device determines whether to activate the security protection for the first UP data.

In some embodiments, the security protection includes at least one of integrity protection or confidentiality protection.

FIG. 5 is a flowchart illustrating a policy control method according to an embodiment of the present disclosure. As shown in FIG. 5, the embodiments of the disclosure relate to a policy control method, which may be performed by a PCF. The method may include the following step S5101.

At S5101, during a service authorization and information provisioning procedure of a first terminal, a UP security policy is sent to an access network device via an AMF.

For the optional implementations of the step S5201, reference may be made tothe optional implementation of the steps S2201 to S2202 in FIG. 2B, as well as other related parts in the embodiments involved in FIG. 2B, which will not be repeated here.

In some embodiments, the AMF may include a first AMF and/or a second AMF.

For example, if the terminal device includes the first terminal, the AMF may include the first AMF; if the terminal device includes the second terminal, the AMF may include the second AMF; and if the terminal device includes both the first and second terminals, the AMF may include both the first and second AMFs.

In some embodiments, the terminal device includes a first terminal and/or a second terminal, and the UP security policy includes at least one of a first UP security policy or a second UP security policy, in which the first UP security policy is a UP security policy corresponding to the first terminal, and the second UP security policy is a UP security policy corresponding to the second terminal, and the first terminal and the second terminal perform UP data local transmission via the access network device.

In some embodiments, the PCF includes at least one of a first PCF or a second PCF, the first PCF is configured to send the first UP security policy to the access network device via a first AMF during a service authorization and information provisioning procedure of the first terminal, and the second PCF is configured to send the second UP security policy to the access network device via a second AMF during a service authorization and information provisioning procedure of the second terminal.

In some embodiments, the method further includes:
determining the UP security policy corresponding to the terminal from a UDR.

In some embodiments, the UP security policy indicates any one of:
activating the security protection for the first UP data;
not activating the security protection for the first UP data; or
first indication information indicating that the access network device determines whether to activate the security protection for the first UP data.

In some embodiments, the security protection includes at least one of integrity protection or confidentiality protection.

In some embodiments, the UP security policy is provisioned to the gNB in UE-satellite-UE communication where no core network function in the ground network is involved in the communication procedure.

In some embodiments, the architecture of UE-satellite-UE communication may include the following items (1)-(3).
(1) For using the feature of UE-satellite-UE communication, the UE needs to subscribe this feature with the operator. Once the feature is subscribed by the UE, the UP security policy for UE-satellite-UE communication is configured as part of the UE subscription information, which may be stored in the UDM or in the UDR.
(2) In UE-satellite-UE communication scenario, the existing registration procedure involving the relevant core network functions (e.g. UDM, PCF, AMF) as well as the service authorization and information provisioning procedure may be reused for all the involved UEs.
(3) In UE-satellite-UE communication scenario, the core network functions (including SMF) in the ground network may not be involved in the PDU session establishment procedure (e.g. due to feeder link unavailability), or only a minimum set of SMF functionalities required for PDU session establishment are moved to the gNB on the satellite.

In some embodiments, the UP security policy is provisioned by the SMF to the gNB during the PDU session establishment procedure per existing specification. If the SMF on the ground is not used in the UE-satellite-UE communication establishment (assumed in the above item (3)), it is proposed that the UP security policy is provisioned to the gNB on the satellite by the UDM during the registration procedure, which is supported by the above assumptions (1) and (2).

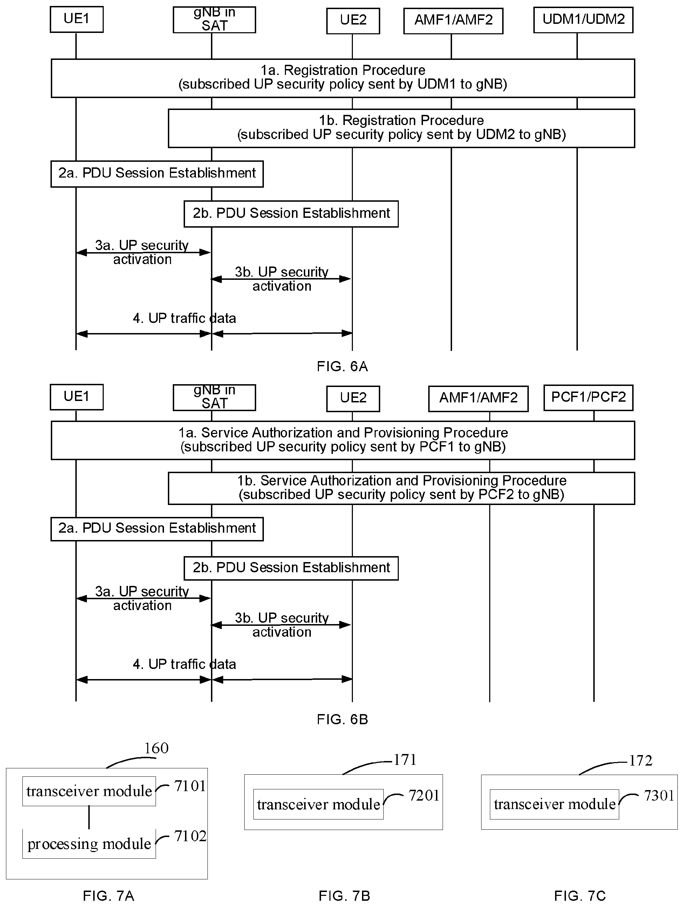

In some embodiments, FIG. 6A is an interaction diagram illustrating a policy control method according to an embodiment of the present disclosure. As shown in FIG. 6A, the method may include the following steps.

At 1a, UE1 initiates the registration procedure towards the core network, during which the UP security policy for UE1 is sent to the gNB by the UDM1 via the AMF1.

At 1b, UE2 initiates the registration procedure towards the core network, during which the UP security policy for UE2 is sent to the gNB by the UDM2 via the AMF2.

At 2, UE1/UE2 initiates the PDU session establishment procedure respectively towards the network, i.e. the gNB on the satellite (e.g., 2a and 2b in FIG. 6A).

At 3, the gNB on the satellite activates the UP security status for UE1/UE2 respectively based on the UP security policy received from the UDM.

In some embodiments, If the security policy indicates "Required", the gNB activates Uu UP security protection per each DRB using a radio resource control (RRC) signaling. If the security policy indicates "Not needed", the gNB does not activate Uu UP security protection for the established PDU session. If the policy indicates "Preferred", the gNB can decide by itself whether to activate Uu UP security protection or not. But the gNB cannot overrule the UP security policy received from the UDM, when the policy indicates "Required" or "Not needed.

It should be noted that the UE2 UP security policy may not be the same as the UE1 UP security policy. Hence the activated UE1 security status may not be the same as the activated UE2 security status UP.

At 4, the UP traffic transferred between UE1 and UE2 via the gNB is protected by the activated security methods.

It should be noted that it is possible that the protection applied to the UP traffic between UE1 and the gNB is different from the protection applied to the UP traffic between UE2 and the gNB, if the activated UE1 security status is different from the activated UE2 security status.

In some embodiments, the UP security policy is provisioned to the gNB on the satellite by the PCF during a service authorization and information provisioning procedure, which is supported by the above assumptions (1) and (2).

FIG. 6B is an interaction diagram illustrating a policy control method according to an embodiment of the disclosure. As shown in FIG. 6B, the method may include the following steps.

At 1a, UE1 initiates a service authorization and provisioning procedure towards the core network, during which the UP security policy for UE1 is sent to the gNB by the PCF1 via the AMF1. The PCF may retrieve the UP security policy from the UDR.

At 1b, UE2 initiates a service authorization and provisioning procedure towards the core network, during which the UP security policy for UE2 is sent to the gNB by the PCF2 via the AMF2. The PCF may retrieve the UP security policy from the UDR .

At 2, UE1/UE2 initiates the PDU session establishment procedure respectively towards the network, i.e. the gNB on the satellite (e.g., 2a and 2b in FIG. 6B).

At 3, the gNB on the satellite activates the Uu UP security status for UE1/UE2 respectively based on the UP security policy received from the PCF.

In some embodiments, if the security policy indicates "Required", the gNB activates Uu UP security protection per each DRB using an RRC signaling. If the security policy indicates "Not needed", the gNB does not activate Uu UP security protection for the established PDU session. If the security policy indicates "Preferred", the gNB can decide by itself whether to activate Uu UP security protection or not. But the gNB cannot overrule the UP security policy received from the PCF, when the policy indicates "Required" or "Not needed".

At 4, the UP traffic transferred between UE1 and UE2 via the gNB is protected by the activated security methods.

In some embodiments, for PDU session established for UE-satellite-UE communication, it is proposed that UP security policy can also be preconfigured on the gNB on the satellite, i.e. the gNB can determine how to activate Uu UP security without the security policy provisioned by the core work. For example, the gNB can decide:
(a) the integrity protection for UP traffic of UE-satellite-UE communication over Uu interface shall always be activated;
(b) the confidentiality protection for UP traffic of UE-satellite-UE communication over Uu interface shall always be activated; and
(c) the integrity and confidentiality protection for UP traffic of UE-satellite-UE communication over Uu interface shall always be activated.

In some embodiments, for the UDM side, the UDM shall be able to provide a UP security policy to the gNB via the AMF during a registration procedure based on UE subscription data

In some embodiments, for the PCF side, the PCF shall be able to provide a UP security policy to the gNB via the AMF during a service authorization and information provisioning procedure.

In some embodiments, for the gNB side, the gNB shall be able to receive a UP security policy from the UDM via the AMF during a registration procedure for a UE.

In some embodiments, for the gNB side, the gNB shall be able to receive a UP security policy from the PCF via the AMF during a service authorization and information provisioning procedure for a UE.

In some embodiments, for the gNB side, the gNB shall be able to determine how to activate a Uu UP security without the UP security policy provisioned by the core network.

In some embodiments of the disclosure, a communication system is provided, which may include an access network device, a UDM, and a PCF. The access network device may execute the policy control method performed by the access network device in the foregoing embodiments of the disclosure. The UDM may execute the policy control method performed by the UDM in the foregoing embodiments of the disclosure. The PCF may execute the policy control method performed by the PCF in the foregoing embodiments of the disclosure.

The disclosure also provides an apparatus for implementing any of the above methods. For example, an apparatus is provided that includes units or modules for implementing the steps performed by the access network device in any one of the above methods. For example, another apparatus is provided that includes a unit or module for implementing the steps performed by the UDM in any one of the above methods. For example, another apparatus is provided that includes a unit or module for implementing the steps performed by the PCF in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a block diagram of an access network device according to an embodiment of the disclosure. As shown in FIG. 7A, the access network device 160 may include at least one of a transceiver module 7101, a processing module 7102, or the like. In some embodiments, the transceiver module 7101 is configured to obtain a UP security policy. The processing module 7102 is configured to perform security protection for first UP data based on the UP security policy, in which the first UP data is UP data locally transmitted by a terminal via the access network device. Optionally, the transceiver module 7101 may be used to perform at least one of the communication steps such as sending and/or receiving performed by the access network device 160 in any one of the above methods (e.g., step S2102, but not limited herein), which will not be repeated here. Optionally, the processing module 7102 may be used to perform at least one of the other steps (such as step S2106, but not limited herein) performed by the access network device 160 in any one of the above methods, which will not be repeated here.

In some embodiments, the transceiver module may include a sending module and/or a receiving module, which may be separate or integrated together. Optionally, the transceiver module may be interchanged with the transceiver.

In some embodiments, the processing module may be a single module or may include a plurality of sub-modules. Optionally, the aforementioned sub-modules may each execute all or part of the steps required by the processing module. Optionally, the processing module may be interchanged with the processor.

FIG. 7B is a block diagram of a UDM according to an embodiment of the disclosure. As shown in FIG. 7B, the UDM 171 may include at least one of a transceiver module 7201, a processing module 7202, or the like. In some embodiments, the transceiver module 7201 is configured to send a UP security policy via an AMF to an access network device during a registration procedure of a terminal, in which the UP security policy is used by the access network device to perform security protection for first UP data, and the first UP data is UP data locally transmitted by the terminal via the access network device. Optionally, the transceiver module 7201 may be used to perform at least one of the communication steps such as sending and/or receiving performed by the UDM 171 in any one of the above methods (e.g., step S2102, but not limited herein), which will not be repeated here.

In some embodiments, the transceiver module may include a sending module and/or a receiving module, which may be separate or integrated together. Optionally, the transceiver module may be interchanged with the transceiver.

FIG. 7C is a block diagram of a PCF according to an embodiment of the disclosure. As shown in FIG. 7C, the PCF 172 may include at least one of a transceiver module 7301, a processing module 7302, or the like. In some embodiments, the transceiver module 7301 is configured to send a UP security policy via an AMF to an access network device during a service authorization and information provisioning procedure of a terminal, in which the UP security policy is used by the access network device to perform security protection for first UP data, and the first UP data is UP data locally transmitted by the terminal via the access network device. Optionally, the transceiver module 7301 may be used to perform at least one of the communication steps such as sending and/or receiving performed by the PCF 172 in any one of the above methods (e.g., step S2201, but not limited herein), which will not be repeated here.

In some embodiments, the transceiver module may include a sending module and/or a receiving module, which may be separate or integrated together. Optionally, the transceiver module may be interchanged with the transceiver.

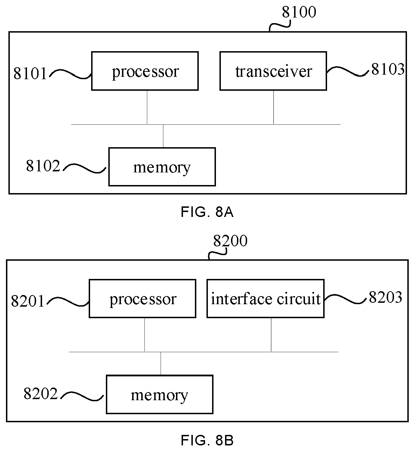

FIG. 8A is a block diagram of a communication device 8100 according to an embodiment of the disclosure. The communication device 8100 may be a network device (such as an access network device, a core network device, etc.), or a terminal (UE, etc.), a chip, chip system, or processor that supports the first device to implement any of the above methods, or a chip, chip system, or processor that supports the terminal to implement any of the above methods. The communication device 8100 may be configured to implement the methods described in the above method embodiments. For details, reference may be made to the description in the above method embodiments.

As shown in FIG. 8A, the communication device 8100 may include one or more processors 8101. The processor 8101 may be a general purpose processor or a special purpose processor, for example, a baseband processor or a central processing unit. The baseband processor may be configured to process communication protocols and communication data, and the central processing unit may be configured to control communication apparatuses (such as a base station, a baseband chip, an IoT device, an IoT device chip, a DU or a CU, etc.), execute programs, and process program data. The communication device 8100 is configured to execute any one of the above methods.

In some embodiments, the communication device 8100 further includes one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above method (e.g., steps S2102, S2104, but not limited herein), and the processor 8101 performs at least one of other steps (e.g., steps S2101, but not limited herein).

In some embodiments, the transceiver may include a receiver and/or a transmitter, which may be separate or integrated together. Optionally, the terms such as transceiver, transceiver unit, transceiving machine, transceiving circuit, etc. may be used interchangeably; the terms such as transmitter, transmission unit, transmitting machine, transmitting circuit, etc. may be used interchangeably; and the terms such as receiver, reception unit, receiving machine, receiving circuit, etc. may be used interchangeably.

In some embodiments, the communication device 8100 may include one or more interface circuits. Optionally, the interface circuit is connected to the memory 8102. The interface circuit may be configured to receive signals from the memory 8102 or other devices, and may be configured to send signals to the memory 8102 or other devices. For example, the interface circuit may read instructions stored in the memory 8102 and send the instructions to the processor 8101.

The communication device 8100 in the above embodiments may be a first device or an IoT device, but a scope of the communication device 8100 in the disclosure is not limited herein, and a structure of the communication device 8100 may not be limited by FIG. 8A. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, an IoT device, an intelligent IoT device, a cellular phone, a wireless device, a handheld phone, a mobile unit, a vehicle-mounted device, a first device, a cloud device, an artificial intelligence device, etc.; 6) others.

FIG. 8B is a block diagram illustrating a chip 8200 according to an embodiment of the disclosure. For a case where the communication device 8100 may be a chip or a chip system, reference may be made to the block diagram of the chip 8200 shown in FIG. 8B, but not limited herein.

The chip 8200 includes one or more processors 8201. The chip 8200 is configured to execute any one of the above methods.

In some embodiments, the chip 8200 further includes one or more interface circuits 8203. Optionally, the interface circuit 8203 is connected to a memory 8202. The interface circuit 8203 may be configured to receive signals from the memory 8202 or other devices, and may be configured to send signals to the memory 8202 or other devices. For example, the interface circuit 8203 may read the instructions stored in the memory 8202 and send the instructions to the processor 8201.

In some embodiments, the interface circuit 8203 performs at least one of the communication steps such as sending and/or receiving in the above method (e.g., steps S2102, S2104, but not limited herein), while the interface circuit 8203 performs other steps (e.g., step S2101, but not limited herein).

In some embodiments, the terms such as interface circuit, interface, transceiver pin, transceiver, etc. may be used interchangeably.

In some embodiments, the chip 8200 further includes one or more memories 8202 for storing instructions. Optionally, all or some of the memories 8202 may be located outside the chip 8200.

The embodiments of the disclosure also provide a storage medium for storing instructions. When the instructions are running on the communication device 8100, the communication device 8100 is configured to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited herein, and the above storage medium may also be a transitory storage medium.

The embodiments of the disclosure also provide a program product. When the program product is executed by the communication device 8100, the communication device 8100 is configured to implement any one of the above methods. Optionally, the above program product is a computer program product.

The embodiments of the disclosure also provide a computer program. When the computer program is running on a computer, the computer is configured to implement any one of the above methods.

## Claims

1. A policy control method, performed by an access network device, comprising:
obtaining a user plane (UP) security policy; and
performing security protection for first UP data based on the UP security policy, wherein the first UP data is UP data locally transmitted by a terminal via the access network device.

2. The method according to claim 1, wherein
the terminal comprises a first terminal and/or a second terminal,
the UP security policy comprises at least one of a first UP security policy or a second UP security policy, wherein the first UP security policy is a UP security policy corresponding to the first terminal, and the second UP security policy is a UP security policy corresponding to the second terminal, and
the first terminal and the second terminal perform UP data local transmission via the access network device.

3. The method according to claim 2, wherein obtaining the UP security policy comprises at least one of:
receiving the first UP security policy sent by a first unified data management (UDM) via a first access and mobility management function (AMF), during a registration procedure of the first terminal; or
receiving the second UP security policy sent by a second UDM via a second AMF, during a registration procedure of the second terminal.

4. The method according to claim 2, wherein obtaining the UP security policy comprises at least one of:
receiving the first UP security policy sent by a first policy control function (PCF) via a first access and mobility management function (AMF), during a service authorization and information provisioning procedure of the first terminal; or
receiving the second UP security policy sent by a second PCF via a second AMF, during a service authorization and information provisioning procedure of the second terminal.

5. The method according to any one of claims 2-4, wherein the first UP data comprises at least one of: second UP data or third UP data, wherein the second UP data is UP data protected by the first UP security policy, and the third UP data is UP data protected by the second UP security policy.

6. The method according to claim 5, wherein performing the security protection for the first UP data based on the UP security policy comprises:
receiving a first protocol data unit (PDU) session establishment request sent by the first terminal; and
activating security protection for the second UP data based on the first UP security policy.

7. The method according to claim 5 or 6, wherein performing the security protection for the first UP data based on the UP security policy comprises:
receiving a second protocol data unit (PDU) session establishment request sent by the second terminal; and
activating security protection for the third UP data based on the second UP security policy.

8. The method according to claim 1, wherein the first UP security policy comprises a third UP security policy, and the third UP security policy is configured to perform security protection for UP data locally transmitted by the access network device.

9. The method according to claim 8, wherein obtaining the UP security policy comprises:
obtaining first configuration information indicating the third UP security policy.

10. The method according to claim 9, wherein performing the security protection for the first UP data based on the UP security policy comprises:
activating the security protection for the first UP data corresponding to the third UP security policy based on the first configuration information.

11. The method according to any one of claims 1-10, wherein the UP security policy indicates any one of:
activating the security protection for the first UP data;
not activating the security protection for the first UP data; or
first indication information indicating that the access network device determines whether to activate the security protection for the first UP data.

12. The method according to any one of claims 1-11, wherein the security protection comprises at least one of integrity protection or confidentiality protection.

13. A policy control method, performed by a unified data management (UDM), comprising:
sending a user plane (UP) security policy via an access and mobility management function (AMF) to an access network device during a registration procedure of a terminal, wherein the UP security policy is used by the access network device to perform security protection for first UP data, and the first UP data is UP data locally transmitted by the terminal via the access network device.

14. The method according to claim 13, wherein sending the UP security policy via the AMF to the access network device comprises:
determining to send the UP security policy based on subscription information of the terminal; and
sending the UP security policy to the access network device via the AMF.

15. The method according to claim 14, wherein determining to send the UP security policy based on the subscription information of the terminal comprises:
determining that the terminal is subscribed to UP data local transmission based on the subscription information of the terminal; and
determining to send the UP security policy.

16. The method according to any one of claims 13-15, wherein
the terminal comprises a first terminal and/or a second terminal,
the UP security policy comprises at least one of a first UP security policy or a second UP security policy, wherein the first UP security policy is a UP security policy corresponding to the first terminal, and the second UP security policy is a UP security policy corresponding to the second terminal, and
the first terminal and the second terminal perform UP data local transmission via the access network device.

17. The method according to claim 16, wherein the UDM comprises at least one of a first UDM or a second UDM, the first UDM is configured to send the first UP security policy to the access network device via a first AMF during a registration procedure of the first terminal, and the second UDM is configured to send the second UP security policy to the access network device via a second AMF during a registration procedure of the second terminal.

18. The method according to any one of claims 13-17, wherein the UP security policy indicates any one of:
activating the security protection for the first UP data;
not activating the security protection for the first UP data; or
first indication information indicating that the access network device determines whether to activate the security protection for the first UP data.

19. The method according to any one of claims 13-18, wherein the security protection comprises at least one of integrity protection or confidentiality protection.

20. A policy control method, performed by a policy control function (PCF), comprising:
sending a user plane (UP) security policy via an access and mobility management function (AMF) to an access network device during a service authorization and information provisioning procedure of a terminal, wherein the UP security policy is used by the access network device to perform security protection for first UP data, and the first UP data is UP data locally transmitted by the terminal via the access network device.

21. The method according to claim 20, wherein
the terminal comprises a first terminal and/or a second terminal,
the UP security policy comprises at least one of a first UP security policy or a second UP security policy, wherein the first UP security policy is a UP security policy corresponding to the first terminal, and the second UP security policy is a UP security policy corresponding to the second terminal, and
the first terminal and the second terminal perform UP data local transmission via the access network device.

22. The method according to claim 21, wherein the PCF comprises at least one of a first PCF or a second PCF, the first PCF is configured to send the first UP security policy to the access network device via a first AMF during a service authorization and information provisioning procedure of the first terminal, and the second PCF is configured to send the second UP security policy to the access network device via a second AMF during a service authorization and information provisioning procedure of the second terminal.

23. The method according to any one of claims 20-22, further comprising:
determining the UP security policy corresponding to the terminal from a unified data repository (UDR).

24. The method according to any one of claims 20-23, wherein the UP security policy indicates any one of:
activating the security protection for the first UP data;
not activating the security protection for the first UP data; or
first indication information indicating that the access network device determines whether to activate the security protection for the first UP data.

25. The method according to any one of claims 20-24, wherein the security protection comprises at least one of integrity protection or confidentiality protection.

26. An access network device, comprising:
a transceiver module, configured to obtain a user plane (UP) security policy; and
a processing module, configured to perform security protection for first UP data based on the UP security policy, wherein the first UP data is UP data locally transmitted by a terminal via the access network device.

27. A unified data management (UDM), comprising:
a transceiver module, configured to send a user plane (UP) security policy via an access and mobility management function (AMF) to an access network device during a registration procedure of a terminal, wherein the UP security policy is used by the access network device to perform security protection for first UP data, and the first UP data is UP data locally transmitted by the terminal via the access network device.

28. A policy control function (PCF), comprising:
a transceiver module, configured to send a user plane (UP) security policy via an access and mobility management function (AMF) to an access network device during a service authorization and information provisioning procedure of a terminal, wherein the UP security policy is used by the access network device to perform security protection for first UP data, and the first UP data is UP data locally transmitted by the terminal via the access network device.

29. A communication device, comprising one or more processors;
wherein the communication device is configured to implement the policy control method according to any one of claims 1-12, the policy control method according to any one of claims 13-19 or the policy control method according to any one of claims 20-25.

30. A communication system, comprising:
an access network device, configured to implement the policy control method according to any one of claims 1-12,
a unified data management (UDM), configured to implement the policy control method according to any one of claims 13-19, and
a policy control function (PCF), configured to implement the policy control method according to any one of claims 20-25.

31. A storage medium storing instructions, wherein the instructions, when executed on a communication device, cause the communication device to implement the policy control method according to any one of claims 1-12, the policy control method according to any one of claims 13-19 or the policy control method according to any one of claims 20-25.
